# EUROPEAN PATENT SPECIFICATION

(11) **EP 2 860 416 B1**
(45) Date of publication and mention of the grant of the patent: **29.07.2020**
(21) Application number: 13800659.8
(22) Date of filing: 29.05.2013
(51) Int. Cl.: F16C 25/08, F16C 19/16, F16C 33/58, F16C 33/76, F16C 19/54

(54) **BALL BEARING**
KUGELLAGER
ROULEMENT À BILLES

(30) Priority: 08.06.2012 JP 2012131171
(43) Date of publication of application: 15.04.2015
(73) Proprietor: Kato, Heizaburo, Shizuoka 439-0019 (JP)
(72) Inventor: Kato, Heizaburo, Shizuoka 439-0019 (JP)
(74) Representative: Keenway Patentanwälte Neumann Heine Taruttis
(86) International application number: PCT/JP2013/064895
(87) International publication number: WO 2013/183516

(56) References cited:
- DE-A1- 3 143 344
- DE-A1- 3 525 691
- DE-A1- 4 108 827
- DE-A1- 19 818 634
- DE-A1- 19 946 383
- DE-A1-102009 058 355
- DE-A1-102010 005 537
- FR-A1- 2 730 282
- JP-A- H06 341 431
- JP-A- H07 310 742
- JP-A- S51 132 351
- JP-U- H0 519 642
- JP-U- S6 249 019
- JP-U- H02 134 318
- US-A- 3 307 890
- US-A- 4 033 645
- US-A- 4 611 934

## Description

### Technical Field

The invention relates to a ball bearing including a pressing mechanism that presses a plurality of spherical rolling elements against an outer ring and an inner ring.

### Background Art

In conventional machine tools, the bearing of a shaft is preloaded in order to increase the rotational rigidity and running accuracy of the shaft, and tc reduce vibration and noise. That is, the rolling elements of the bearing are in advance pressed against an outer ring and an inner ring under a certain pressing force ([PTL 1]). US 4 611 934 A ([PTL 2]) discloses a spindle being rotatably mounted within a housing on spaced-apart antifriction bearings. The outer race of the rear bearing is supported in a separate circular diaphragm concentric with the spindle axis, which may be flexed along the axis to load the bearings against one another. A hydraulic chamber is formed against the diaphragm to load the diaphragm at preselected intervals.

### Citation List

### [Patent Literature].

[PTL 1] Utility Model Registration No.2591620
[PTL 2] US 4 611 934 A

### Summary of the Invention

### Technical Problem

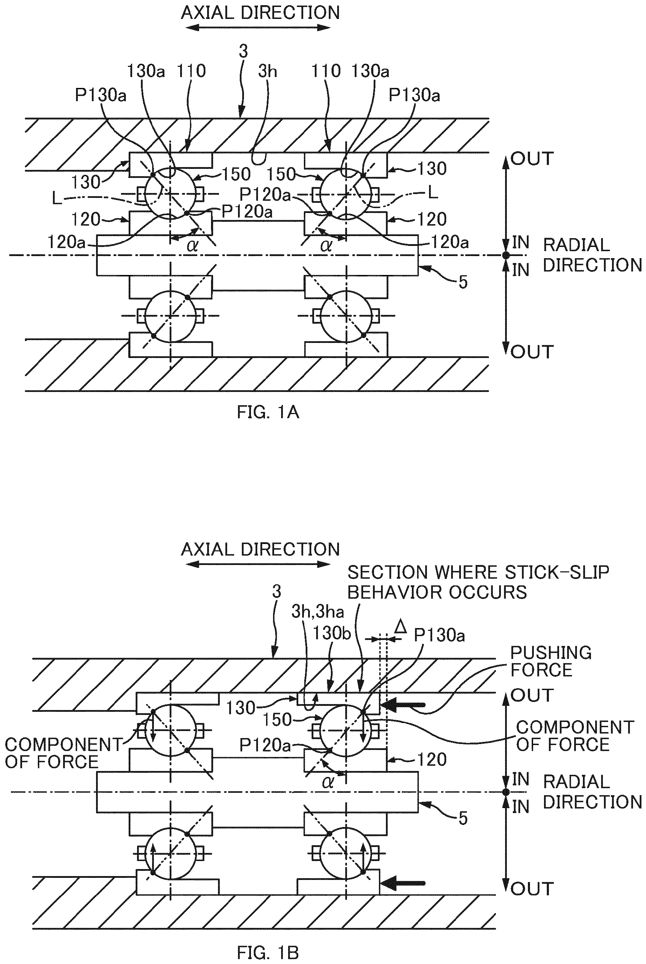

FIG. 1A is a schematic central sectional view of a pair of bearings 110 and 110, which shows an example of the preloading method. The outer ring 130 of each bearing 110 is fitted into and supported by the attachment hole 3h of a housing 3. The inner ring 120 of each bearing 110 is, on the other hand, fitted to a shaft 5, which is the supported object. And, the inner ring 120 and the shaft 5 are fixed in such a manner as not to permit the relative movement. In this example, so-called angular contact ball bearings 110 are employed. That is, a plurality of spherical rolling elements 150, which are placed between the inner ring 120 and the outer ring 130, contact the rolling motion surface 120a of the inner ring 120 and the rolling motion surface 130a of the outer ring 130 at a certain contact angle α.

The contact angle α mentioned above is an angle specifying a contact position at which each of the rolling elements 150 contacts the rolling motion surface 120a and the rolling motion surface 130a. In other words, the contact angle α is generally an angle α between a radial direction (a direction perpendicular to the axis) and a straight line L connecting the contact position P120a with the contact position P130a; the contact position P120a being a position at which each rolling element 150 contacts the rolling motion surface 120a of the inner ring 120, the contact position P130a being a position at which the rolling element 150 contacts the rolling motion surface 130a of the outer ring 130. For example, in a case of the contact angle of 35°, the rolling element 150 contacts the inner ring 120 and the outer ring 130 at the contact positions P120a and 130a, the contact positions P120a and 130a being positions inclined 35° to the radial direction respectively on the rolling motion surface 120a of the inner ring 120 and the rolling motion surface 130a of the outer ring 130.

In order to preload such an angular contact ball bearing 110, the outer ring 130 is pushed into the housing 3 in an axial direction (the direction along the axis of the ball bearing 110), for example. Then, as shown in FIG. 1B, an axial force of the pushing is converted into a radially inward component of the force through a contact angle α between the outer ring 130 and the rolling elements 150, and is transmitted to the rolling elements 150. The radially inward component causes the rolling elements 150 to be pushed onto the inner ring 120. Consequently, the bearing is preloaded, in which the rolling elements 150 are pressed against both of the inner ring 120 and the outer ring 130.

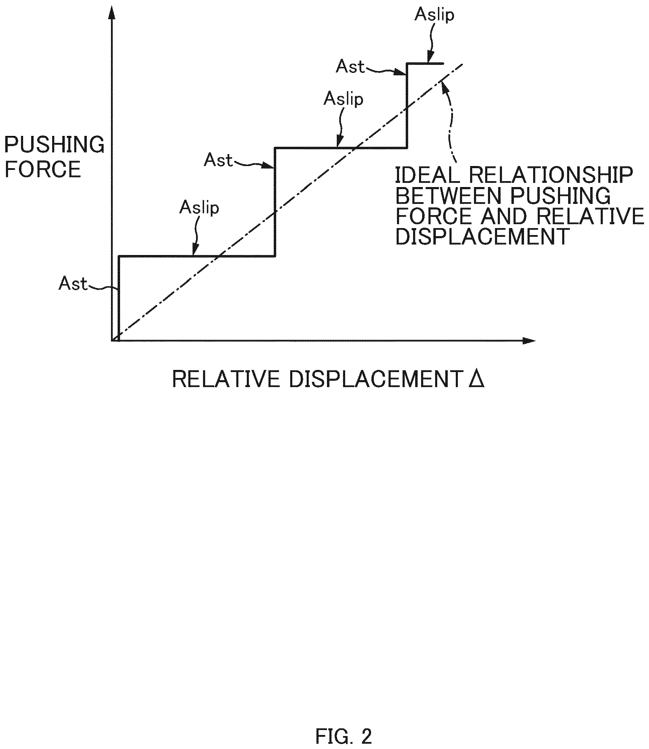

However, when pushing the outer ring 130 in the axial direction as shown in FIG. 1B, a so-called stick-slip behavior may occur due to static friction or dynamic friction caused by metallic contact between the outer surface 130b of the outer ring 130 and the inner surface 3ha of the attachment hole 3h of the housing 3. That is, when pushing the outer ring 130 in the axial direction in order to preload the bearing, the outer ring 130 is displaced relative to the housing 3 in the axial direction due to various small gaps, slight deformations, etc. of the ball bearing 110 (See Δ of FIG. 1B). In this case, the outer ring 130 repeats alternately moving and ceasing. FIG. 2 is a graph illustrating this behavior. The vertical axis is the magnitude of the pushing force applied on the outer ring 130 in the axial direction, and the horizontal axis is the relative displacement Δ of the outer ring 130 relative to the housing 3. As can be seen from the graph, there are stick ranges Ast in which no relative displacement occurs though the pushing force increases, and slip ranges Aslip in which relative displacement occurs though the pushing force does not increase. That is, in the foregoing method of preloading the bearing with the outer ring 130 sliding relative to the housing 3, it is difficult to set, within a suitable range, the pressing force by which the rolling elements 150 are pressed against the outer ring 130 and the inner ring 120.

If the magnitude of the pressing force does not fall within the suitable range, various problems can occur during the operation of the machine tool, (during the use of the ball bearing 110). For example, if the pressing force is small, it can be impossible to ensure the rotational rigidity and running accuracy of the shaft 5, or damages caused by sliding such as smearing can occur to the rolling motion surfaces 120a and 130a. If the pressing force is, in contrast, large, frictional resistance of the ball bearing 110 is large, which can increase power loss, heat, and the like.

The invention has been made in view of the above conventional problems, and an advantage thereof is to provide a ball bearing in which control of pressing force is facilitated, the ball bearing including a pressing mechanism which presses rolling elements against an outer ring and an inner ring.

### Solution to Problem

An aspect of the invention to achieve the above advantage is A ball bearing according to claim 1.

Other features of this invention will become apparent from the description in this specification and the attached drawings.

### Effects of the Invention

According to the invention, in a ball bearing including a pressing mechanism which presses rolling elements against an outer ring and an inner ring, control of pressing force is facilitated.

### BRIEF DESCRIPTION OF THE DRAWINGS

FIGS. 1A and 1B are schematic central sectional views of a pair of bearings 110 and 110, which shows an example of a conventional preloading method. FIG. 1A shows the bearings which are not preloaded, and FIG. 1B shows the bearings which are preloaded.
FIG. 2 is a graph illustrating stick-slip behavior which occurs when preloading (applying pressing force).
FIG. 3A is a schematic central sectional view of a ball bearing 10 of the first embodiment, and FIG. 3B is a cross-sectional view taken along line B-B in FIG. 3A.
FIG. 4 is a magnified view of section IV in FIG. 3A.
FIGS. 5A and 5B are magnified views of the outer ring 30 in FIG. 4. FIG. 5A shows a non-pressurized state of a pressure chamber 30R, and FIG. 5B shows a pressurized state thereof.
FIG. 6 is a graph showing the relationship between the fluid-supply pressure of pressurized fluid and the displacement Δ32 of an inner annular section 32.
FIG. 7 is a schematic central sectional view of an application example of the ball bearing 10 of the first embodiment.
FIG. 8 is a schematic central sectional view of a modified example of the application example, in which the ball bearing 10 of the first embodiment and a conventional ball bearing 110 installed in X arrangement.
FIG. 9A is a schematic central sectional view of a ball bearing 10a of the second embodiment, and FIG. 9B is a cross-sectional view taken along line B-B in FIG. 9A.
FIG. 10A is a magnified view of section X in FIG. 9A.
FIG. 10B shows a modified example of the ball bearing 10a of the second embodiment.
FIGS. 11A and 11B are magnified views of the outer ring 30' in FIG. 10A. FIG. 11A shows a non-pressurized state of the pressure chamber 30R, and FIG. 11B shows a pressurized state thereof.
FIG. 12 is a schematic central sectional view of an application example of the ball bearing 10a of the second embodiment.

### Mode for Carrying Out the Invention

With the description and the accompanied drawings, at least the following matters will be apparent.

A ball bearing, including:
an inner ring;
an outer ring; and
a plurality of spherical rolling elements that roll while in contact with the outer ring and the inner ring at contact angles, each contact angle corresponding to the outer ring and the inner ring,
   the outer ring including:
      an inner annular section having a rolling motion surface with which the rolling elements roll while in contact at a certain contact angle;
      a thin-wall section extending radially outwardly from the inner annular section in an integrated manner;
      an outer annular section that is provided on an outer edge section of the thin-wall section in an integrated manner so as to support the inner annular section in an axially-movable manner through the thin-wall section; and
      a fluid-supply hole that supplies pressurized fluid to an annular space partitioned by the inner annular section, the thin-wall section and the outer annular section,
   the rolling elements being pressed against the outer ring and the inner ring by displacement of the inner annular section in the axial direction,
      the displacement being caused by elastic deformation of the thin-wall section in the axial direction by the pressurized fluid supplied from the fluid-supply hole.

With such a ball bearing, because of the elastic deformation of the thin-wall section in the axial direction according to the fluid-supply pressure of the pressurized fluid, the inner annular section is displaced, which causes the rolling elements to be pressed against the outer ring and the inner ring. Thus, it is possible to effectively avoid the occurrence of stick-slip behavior during the pressing process. The pressing force between the rolling elements and the outer ring and the inner ring can therefore vary smoothly and quickly, substantially in accordance with the magnitude of the fluid-supply pressure. Consequently, it is possible to precisely apply the pressing force, which makes it easy to control the pressing force (control preloading).

In addition, because the pressing force varies quickly according to the fluid-supply pressure of the pressurized fluid, the magnitude of the pressing force can be adjusted to any desirable value smoothly and freely. It is therefore possible to satisfy such demands for varying the pressing force, without any problem.

Also, a pressing mechanism is provided as a part of the outer ring as mentioned above; in other words, the pressing mechanism is built into the ball bearing. Thus, abutment dimensions of the ball bearing, such as the outside diameter, the inside diameter, and the width are able to meet various specifications such as existing standards or industrial standards. The ball bearing is therefore easy to handle because the ball bearing including the pressing mechanism can be attached to various target apparatuses as easily as a standard ball bearing is attached thereto.

In such a ball bearing, it is desirable that
the inner ring contacts each of the rolling elements at two places in the axial direction,
the outer ring includes a second annular section on which a second rolling motion surface of the rolling elements is formed,
the rolling motion surface of the inner annular section of the outer ring contacts the rolling element at one place in the axial direction, the one place corresponding to one of the two places in the axial direction associated with the inner ring,
the second rolling motion surface of the second annular section contacts the rolling element at one place in the axial direction, the one place corresponding to another one of the two places in the axial direction associated with the inner ring.

Such a ball bearing has the configuration of a so-called four-point bearing. Thus, the ball bearing alone can sustain not only radial load but also axial load in both directions, which results in extending its application.

In such a ball bearing, the ball bearing further comprises a ring-shaped plug member
that closes the annular space by being inserted into the annular space while facing the thin-wall section in the axial direction,
the plug member is fixed to the outer annular section in such a manner as not to permit the relative movement,
the plug member is arranged while leaving a certain gap between the plug member and the inner annular section, without being in contact with the inner annular section, and
a seal member made of rubber or resin is placed in the gap between the plug member and the inner annular section.

With such a ball bearing, since the seal member increase the hermeticity of annular space, it is possible to certainly prevent the pressurized fluid from leaking to outside. In addition, though the inner annular section and the seal member slide when the inner annular section is displaced in the axial direction during the process of applying the pressing force, such a rubber or resin seal member makes it possible to effectively avoid the occurrence of stick-slip behavior due to metallic contact.

### === First Embodiment ===

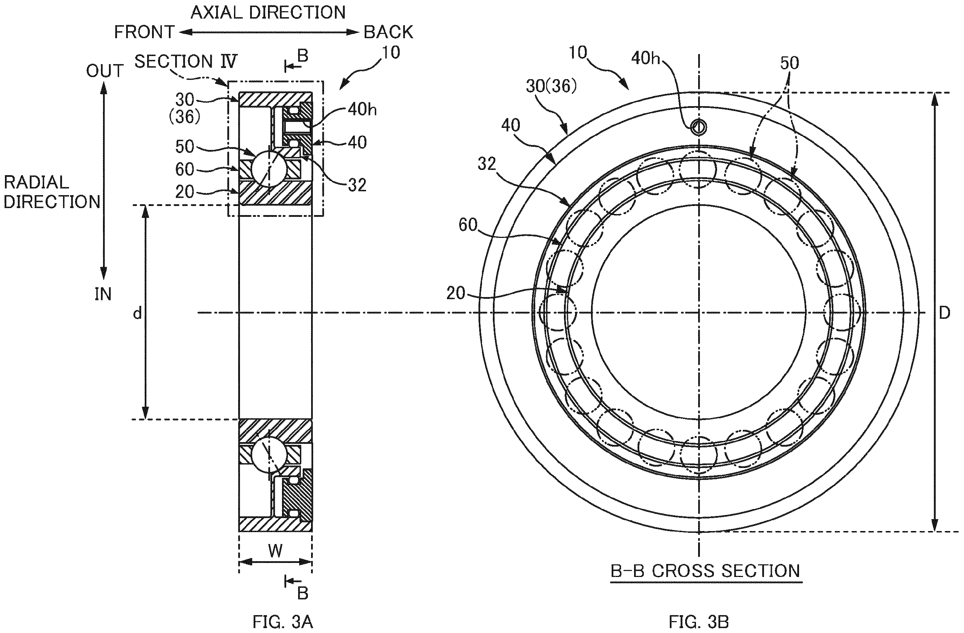

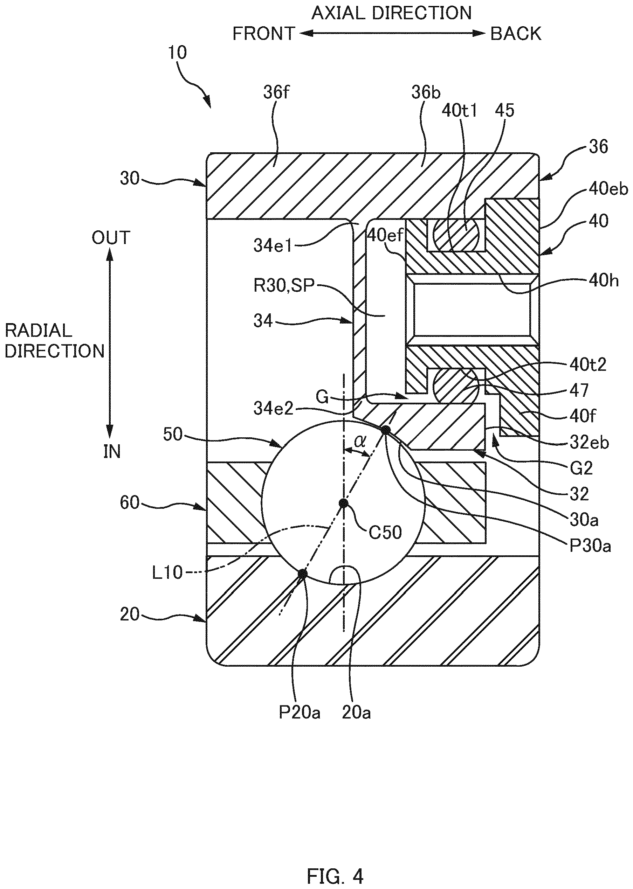

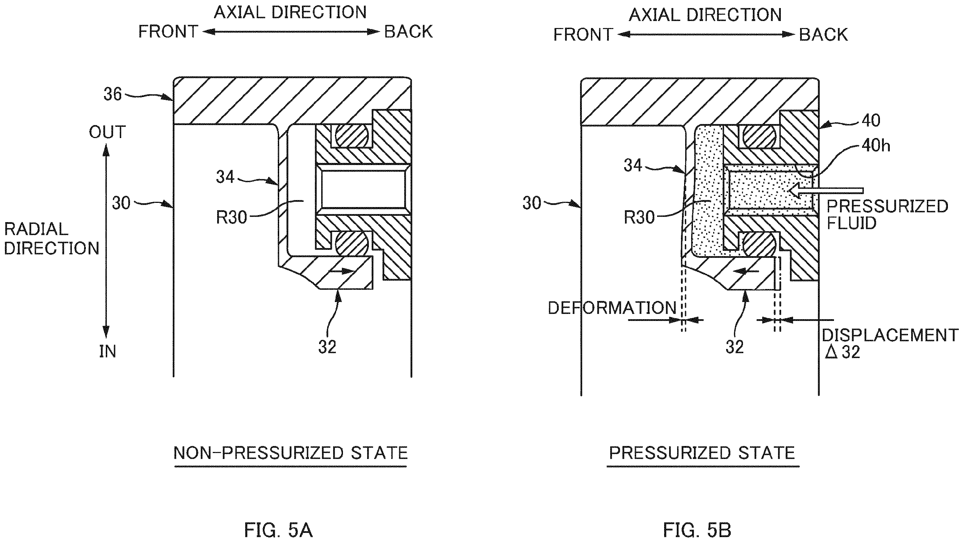

FIG. 3A is a schematic central sectional view of a ball bearing 10 of the first embodiment, and FIG. 3B is a cross-sectional view taken along line B-B in FIG. 3A. FIG. 4 is a magnified view of section IV in FIG. 3A. FIGS. 5A and 5B are magnified views of the outer ring 30 in FIG. 4.

In the description below, the direction along the axis of the ball bearing 10 is referred to as an "axial direction" or a "front-and-back direction", and the radial direction of the ball bearing 10 is referred to as a "radial direction" or an "in-and-out direction ". In some of the cross-sectional views described below, a part of hatchings that should be provided on cross-sectional parts is omitted for some of the members in order to avoid confusion between the drawings.

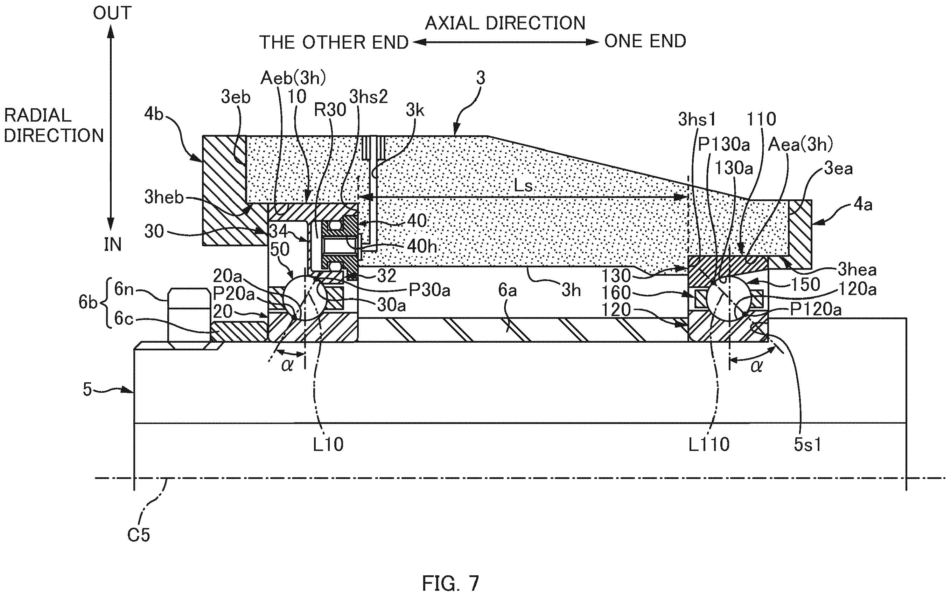

The ball bearing 10 causes a shaft member 5 (e.g., a shaft) to be rotatablely supported in the housing 3 of a suitable apparatus (e.g., machine tool) (see FIG. 7). During its use, the ball bearing 10 supports the shaft member 5 rotatablely as follows: for example, the outer ring 30 of the ball bearing 10 is fitted into an attachment hole 3h of the housing 3, and the inner surface of the inner ring 20 is fitted to the shaft member 5, which is the supported object.

As shown in FIGS. 3A and 3B, the ball bearing 10 of the first embodiment is in the category of so-called single-row angular contact ball bearings. That is, since the ball bearing 10 is a single-row bearing, a plurality of spherical rolling elements 50 are arranged between the inner ring 20 and the outer ring 30 in a line. Also, since the ball bearing 10 is an angular contact ball bearing, each of the rolling elements 50 contacts the rolling motion surface 20a of the inner ring 20 and the rolling motion surface 30a of the outer ring 30 at a certain contact angle α (35° in this example) as shown in FIG. 4. This makes it possible to sustain radial load (external force in the radial direction) which acts on the shaft member 5. Also, it is possible to sustain axial load (external force in the axial direction) in only one direction (backward axial load in FIGS. 3A and 4).

The avoidance of the contact of adjacent rolling elements 50 and 50 is achieved by a cage 60. For example, the cage 60 includes holes each of which accommodates the rolling elements 50 individually, which makes it possible to avoid the contact of the rolling elements 50 and 50.

Within the outer ring 30, the ball bearing 10 includes a preloading mechanism, that is, a pressing mechanism which presses the rolling elements 50 against the inner ring 20 and the outer ring 30. This pressing is performed due to elastic deformation of the following thin-wall section 34 caused by the supply of pressurized fluid to the pressure chamber R30 in the outer ring 30 shown in FIG. 4. This prevents the occurrence of stick-slip behavior during the pressing process. In other words, this prevents, in the pressing process, relative sliding of parts which are in metallic contact with each other; the relative sliding is responsible for the behavior. This enables the rolling elements 50 to be pressed against the outer ring 30 and the inner ring 20 under pressing force by adjusting the fluid-supply pressure of the pressurized fluid, the pressing force corresponding to the fluid-supply pressure.

The configuration of the ball bearing 10 will be described in detail below.

As shown in FIG. 4, the main body of the inner ring 20 is a cylinder made of steel. The groove-shaped, rolling motion surface 20a, on which the rolling elements 50 will roll, is provided on the outer surface of the inner ring 20 along the entire circumference of the outer surface. The rolling motion surface 20a is a concave surface 20a having a substantially arc-shaped cross-sectional shape, which is formed so as to be in contact with each rolling element 50 at a contact angle α of 35°. Thus, the rolling element 50 contacts the inner ring 20 at a contact position P20a which is a position inclined forward 35° to the radial direction on the rolling motion surface 20a.

Note that a material of the inner ring 20 is not limited to steel mentioned above. Non-ferrous metal such as cemented carbide or non-metal such as ceramic may also be employed. The same is also true for the outer ring 30, the rolling elements 50, and the cage 60. However, because load which acts on the cage 60 is small, the cage 60 may be made of plastic.

The outer ring 30 includes: an inner annular section 32 having the rolling motion surface 30a on which the rolling elements 50 roll; a disk-shaped thin-wall section 34 which extends radially outwardly from the inner annular section 32 in an integrated manner and is concentric with the inner annular section 32; and an outer annular section 36 which is provided on the outer edge section 34e1 of the thin-wall section 34 in an integrated manner and concentric with inner annular section 32 and which is for supporting the inner annular section 32 movably in the axial direction through the thin-wall section 34. The thin-wall section 34 is provided substantially on the center of the outer annular section 36 in the axial direction. The inner annular section 32 is provided extending backward in the axial direction from the inner edge section 34e2 of the thin-wall section 34. Thus, backside the thin-wall section 34, there is an annular space SP partitioned by the outer annular section 36, the thin-wall section 34, and the inner annular section 32. The annular space SP serves as a pressure chamber R30 for applying pressing force to the rolling elements 50.

The rolling motion surface 30a, on which the rolling elements 50 will roll, is formed directly on the inner surface of the inner annular section 32 along the entire circumference of the inner surface. The rolling motion surface 30a is a concave surface 30a having a substantially arc-shaped cross-sectional shape, which is formed so as to be in contact with each rolling element 50 at a contact angle α of 35°. Thus, together with the rolling motion surface 20a of the inner ring 20, the rolling motion surface 30a can hold the rolling element 50 therebetween at the contact angles α of 35° from both sides of the radial direction and from both sides of the axial direction. More specifically, the inner annular section 32 is backward of the substantially-central position on the outer annular section 36 in the axial direction, as mentioned above. Consequently, a contact position P30a where the inner annular section 32 contacts a rolling element 50 is also backward in the axial direction. On the other hand, the contact position P20a of the inner ring 20 is forward of the substantially-central position in the axial direction. Thus, the ball center C50 of the rolling element 50 is located on a line segment L10 between these contact positions P20a and P30a of the rolling element 50. Accordingly, the outer ring 30 and the inner ring 20 can hold the rolling element 50 therebetween at a contact angle α of 35° from both sides of the radial direction and from both sides of the axial direction.

In an annular space SP associated with the pressure chamber R30 shown in FIG. 4, a ring-shaped plug member 40 is inserted from the back in the axial direction and is fixed to the outer ring 30. Thus, the annular space SP is sealed while maintaining a volume for serving as the pressure chamber R30 in the front portion of the space. The plug member 40 is fixed only to the outer annular section 36 of the outer ring 30, not to the inner annular section 32 of the outer ring 30. That is, the plug member 40 is fixed to the inner surface of the outer annular section 36 by means such as screwing in such a manner as not to permit the relative movement. The plug member 40 faces the inner annular section 32 while leaving a certain gap G therebetween; in other words, the plug member 40 is not in contact with the inner annular section 32.

Thus, when the supplying of the pressurized fluid and pressure to the pressure chamber R30 causes the elastic deformation of the thin-wall section 34 in the front-and-back direction from the state shown in FIG. 5A to the state shown in FIG. 5B, the inner annular section 32 smoothly is displaced in the front-and-back direction according to the elastic deformation. By the displacement of the inner annular section 32 in the front-and-back direction, the pressing of the rolling elements 50 is performed smoothly.

That is, if the fluid-supply pressure of the pressurized fluid increases and forward elastic deformation of the thin-wall section 34 occurs, the inner annular section 32 is displaced forward as shown in FIG. 5B; thereby, the rolling elements 50 are pushed by the inner annular section 32 at a contact angle α of 35° shown in FIG. 4, and is pushed against the rolling motion surface 20a of the inner ring 20 at a contact angle α of 35°. As a result, the rolling elements 50 are pressed against the outer ring 30 and the inner ring 20. On the contrary, if the fluid-supply pressure of the pressurized fluid decreases, the forward elastic deformation of the thin-wall section 34 decreases as shown in FIG. 5A; the inner annular section 32 accordingly returns backward. As a result, the rolling elements 50 are less pressed. For example, if the fluid-supply pressure of the pressurized fluid lowers to zero, the rolling elements 50 are released from the pressure which presses the rolling elements 50 against the outer ring 30 and the inner ring 20; that is, the rolling elements 50 are not pressed.

In such a pressing process, as mentioned above, while elastic deformation of the thin-wall section 34 in the front-and-back direction occurs, the inner annular section 32 is displaced in the front-and-back direction (See FIGS. 5A and 5B). At that time, as is apparent from the above description, relative sliding of parts which are in metallic contact with each other is prevented almost completely. For example, pairs of the metallic-contact parts are as follows: the outer annular section 36 of the outer ring 30 and the inner surface 3ha of the attachment hole 3h of the housing 3 (FIG. 7); and the inner ring 20 and the shaft member 5 (FIG. 7). In the first embodiment, relative sliding does not occur to both of the pairs in the pressing process.

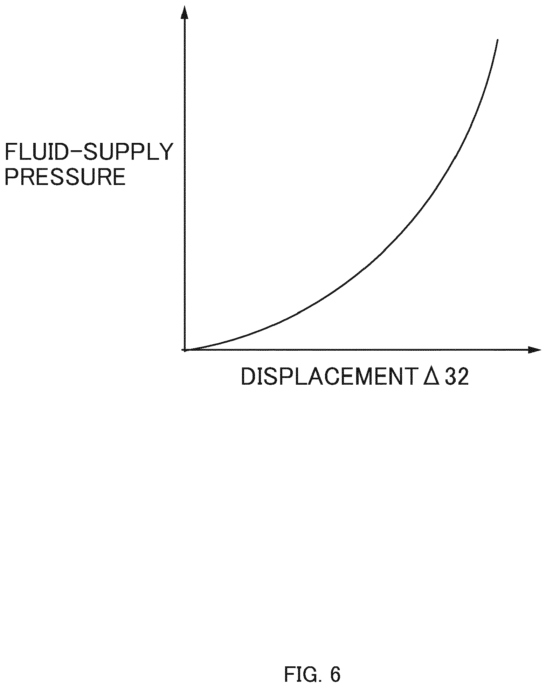

Thus, stick-slip behavior is prevented almost completely. As in the graph of the relationship between the fluid-supply pressure and the forward displacement Δ32 of the inner annular section 32 shown in FIG. 6, the displacement Δ32 of the inner annular section 32 in the front-and-back direction varies smoothly, substantially in accordance with the magnitude of the fluid-supply pressure; there is little stick-slip behavior. And, the pressing force between the rolling elements 50 and the outer ring 30 and the inner ring 20 can vary smoothly and quickly, substantially in accordance with the magnitude of the fluid-supply pressure. It is therefore possible to precisely apply the pressing force, which makes it easy to control preloading (control the pressing force).

Since the pressing force varies smoothly according to the fluid-supply pressure of the pressurized fluid, the magnitude of the pressing force can be adjusted to any desirable value smoothly and freely. It is therefore possible to satisfy such demands for varying the pressing force, without any problem.

The pressurized fluid is supplied to the pressure chamber R30 through a fluid-supply hole 40h, which is drilled in the plug member 40. In the example of FIG. 4, the fluid-supply hole 40h is formed extending through the plug member 40 along the axial direction. That is, an opening of the fluid-supply hole 40h is exposed to the front-end face 40ef of the plug member 40, the opening facing the pressure chamber R30. Also, another opening of the fluid-supply hole 40h is exposed to the back-end face 40eb of the plug member 40, towards the outside of the outer ring 30. Pipes, manifold members or the like, which serve as a passageway of the pressurized fluid, connect to the other opening, and it is thereby possible to supply the pressure chamber R30 with the pressurized fluid. A single fluid-supply hole 40h alone, as in the example of FIG. 3B, may be provided, and a plurality of fluid-supply holes 40h may also be provided. As the pressurized fluid, hydraulic fluid is usually employed; however, compressed air or any fluid other than them may also be employed.

In the first embodiment, a pump, which serves as the source of the pressurized fluid and is not shown in the drawings, is connected to the passageway of the pressurized fluid. In the passageway, a pressure-regulator valve is placed between the pump and the fluid-supply hole 40h. The pressure-regulator valve adjusts the fluid-supply pressure at which the pressurized fluid is supplied to the pressure chamber R30. By the adjustment of the fluid-supply pressure, the pressing force at which the rolling elements 50 are pressed against the outer ring 30 and the inner ring 20 can be adjusted to any desirable value.

Further, in the first embodiment, in order to prevent the pressurized fluid from leaking from the pressure chamber R30, an annular packing 45 is placed between the inner surface of the outer annular section 36 and the outer surface of the plug member 40; an annular packing 47 (corresponding to the seal member) is placed between the inner surface of the plug member 40 and the outer surface of the inner annular section 32, as shown in FIG. 4. The latter packing 47 is made of rubber or resin; therefore, the contact of the following surfaces which slide relative to each other when the inner annular section 32 is displaced in the front-and-back direction is not metallic contact: the inner surface of the packing 47 and the outer surface of the inner annular section 32. This can completely prevent the occurrence of stick-slip behavior. In order to prevent the packing 45 and the packing 47 from dropping from the plug member 40, a groove 40t1 for fastening the packing 45 and a groove 40t2 for fastening the packing 47 are formed on the outer surface and the inner surface of the plug member 40, along the entire circumferences of the outer surface and the inner surface.

As in the example of FIG. 4, preferably, an annular flange section 40f, which projects radially inwardly, is provided in an integrated manner on the inner edge section of the back-end face 40eb of the plug member 40, the flange section 40f facing the back-end face 32eb of the inner annular section 32 and being arranged while leaving a certain gap G2 between the flange section 40f and the back-end face 32eb. This allows the flange section 40f to serves as a fail-safe system when unexpected excessive load acts on the ball bearing 10, the fail-safe system preventing the ball bearing 10 from becoming impossible to support the shaft member 5. That is, when unexpected excessive load acts on the ball bearing 10, the inner annular section 32 can be displaced backward against the fluid-supply pressure of the pressure chamber R30. If the displacement is large, rolling motions of the rolling elements 50 are disturbed, and thus the ball bearing 10 cannot support the shaft member 5. However, in this regard, if the foregoing flange section 40f is provided, when the inner annular section 32 increasing in size to the gap G2, the flange section 40f abuts the back-end face 32eb of the inner annular section 32. And, the flange section 40f restricts the inner annular section 32 so that the inner annular section 32 cannot dispalce more backward. It is therefore possible to certainly avoid the state in which the ball bearing 10 cannot support the shaft member 5. The size of the gap G2 is set in advance based on required accuracy of the axial position of the ball bearing 10 and the like.

As mentioned briefly above, the outer ring 30 is composed of a single member. That is, the outer ring 30 including the inner annular section 32, the thin-wall section 34 and the outer annular section 36 is not composed of members which are joined by means such as welding. The outer ring 30 is a single member formed by cutting it from a solid material with a lathe. This allows the thin-wall section 34 to have high strength though the thin-wall section 34 is thinner than the inner annular section 32 and the outer annular section 36. The abovementioned outer ring 30 is sufficient to serve as the outer ring of the ball bearing 10.

As mentioned above, when the outer ring 30 is formed by cutting it from a solid material with a lathe, it is possible to simultaneously cut the followings together: the rolling motion surface 30a of the inner annular section 32 and the outer surface of the outer annular section 36, the outer surface of the outer annular section 36 serving as the attachment reference surface of the outer ring 30. This allows the ball bearing 30 having a high running accuracy to be manufactured because the rolling motion surface 30a can be processed so that the surface 30a will be coaxial with the temporary center C30 of the outer ring 30.

Further, the pressing mechanism of the first embodiment is built into the outer ring 30. That is, the outer annular section 36, which is the contour of the outer ring 30, accommodates the thin-wall section 34, the inner annular section 32 and the plug member 40, which constitute the pressing mechanism. Thus, the outer shape of the ball bearing 10 is able to meet various specifications such as standards or industrial standards of general ball bearings. For example, as shown in FIG. 4, the ball bearing 10 of the first embodiment has a substantially rectangular cross section similar to that of general ball bearings. More specifically, the inside diameter of the inner ring 20 which determines the inner surface of the ball bearing 10 is uniform through the entire length in the axial direction. The outside diameter of the outer ring 30 which determines the outer surface of the ball bearing 10 is uniform through the entire length in the axial direction. Both edges of the outer ring 30 are in the same position in the axial direction as both edges of the inner ring 20. In addition, the cage 60 and the plug member 40 do not project beyond both edges of the outer ring 30 in the axial direction, and is axially inside thereof. Thus, as shown in FIGS. 3A and 3B, abutment dimensions of the ball bearing 10 are determined by the bearing outside diameter D, the bearing inside diameter d, and a width W (axial length W), which are usually used in ball bearings. The angular contact ball bearing 10, like the first embodiment, including the pressing mechanism can therefore be used in various apparatuses like machine tools as easily as a standard angular contact ball bearing is used.

FIG. 7 is a schematic central sectional view of an application example of the ball bearing 10 of the first embodiment. In this example, the ball bearing 10 of the first embodiment is applied to a supporting structure in which the shaft member 5 like a shaft of a machine tool, etc. is supported in the housing 3. In this drawing, one side of the shaft axis C5 in the radial direction (the upper side in FIG. 7) alone is illustrated and the other side is omitted, because the configuration of the application example is in a mirror image relationship to the shaft axis C5 of the shaft member 5. The shaft axis C5 of the shaft member 5 extends along the axial direction of the ball bearing 10. Of both ends in the axial direction, the right end in FIG. 7 is hereinafter referred to as the "one end (one axial end)", and the left end is hereinafter referred to as the "other end (other axial end)".

Though the ball bearing 10 of the foregoing first embodiment is in the category of single-row angular contact ball bearings, single-row angular contact ball bearings cannot sustain axial load in both directions as mentioned above. In other words, single-row angular contact ball bearings can sustain axial load in either only one direction. For this reason, such a single-row angular contact ball bearing is rarely used singly; usually, at least two single-row angular contact ball bearings are used in combination. Thus, in the application example, the ball bearing 10 of the first embodiment and a conventional single-row angular contact ball bearing 110 are used in combination.

In the ball bearing 10 of the first embodiment, the built-in pressing mechanism can similarly apply the pressing force as mentioned above. This application example has, on the other hand, a configuration in which, when the pressing force is applied to the ball bearing 10 of the first embodiment, the pressing force is applied also to the conventional single-row angular contact ball bearing 110 according to the pressing force applied to the ball bearing 10. The configuration of this application example will be described below.

The housing 3 includes a through hole 3h extending along the axial direction and serving as an accommodating hole 3h which accommodates the shaft member 5, the shaft member 5 being the supported object. With the shaft member 5 being accommodated within the through hole 3h, the shaft member 5 is rotatablely supported about the shaft axis C5 thereof by two single-row angular contact ball bearings 10 and 110. The openings 3hea and 3heb of the through hole 3h are respectively exposed to the one axial end surface 3ea and the other axial end surface 3eb of the housing 3. The opening 3hea exposed to the one-end surface 3ea is hereinafter referred to as "first opening 3hea", and the opening 3heb exposed to the other-end surface 3eb is hereinafter referred to as "second opening 3heb". Of two angular contact ball bearings 10 and 110, the ball bearing 110 provided on the one-end side is a conventional single-row angular contact ball bearing 110, and the ball bearing 10 provided on the other-end side is the ball bearing 10 of the first embodiment. The former is hereinafter referred to as the "first ball bearing 110", and the latter is referred to as the "second ball bearing 10".

The first ball bearing 110 includes an inner ring 120; an outer ring 130; a plurality of spherical rolling elements 150 are placed in line between the inner ring 120 and the outer ring 130; and a cage 160 which holds these rolling elements 150 so that these rolling elements are not in contact with each other. The contact angle α of the first ball bearing 110 is set to 35°, for example.

In the relationship with the second ball bearing 10, the first ball bearing 110 is installed in so-called O arrangement. And, the following straight lines are mirror images of each other with respect to the radial direction: the straight line L110 associated with the contact angle α of the first ball bearing 110 (that is, straight line L110 connecting contact position P120a with contact position P130a; the contact position P120a being a position at which any rolling element 150 contacts the rolling motion surface 120a of the inner ring 120, the contact position P130a being a position at which the rolling element 150 contacts the rolling motion surface 130a of the outer ring 130); and the straight line L10 associated with the contact angle α of the second ball bearing 10 (that is, straight line L10 connecting contact position P20a and contact position P30a; the contact position P20a being a position at which any rolling element 50 contacts the rolling motion surface 20a of the inner ring 20, the contact position P30a being a position at which the rolling element 50 contacts the rolling motion surface 30a of the outer ring 30).

The first ball bearing 110 and the second ball bearing 10 cooperate and can thereby sustain radial load and axial load in both directions. For example, if an axial load directed toward the one-end side (rightward) acts on the shaft member 5, the second ball bearing 10 sustains it. On the other hand, if an axial load directed toward the other-end side (leftward in the drawing) acts, the first ball bearing 110 sustains it.

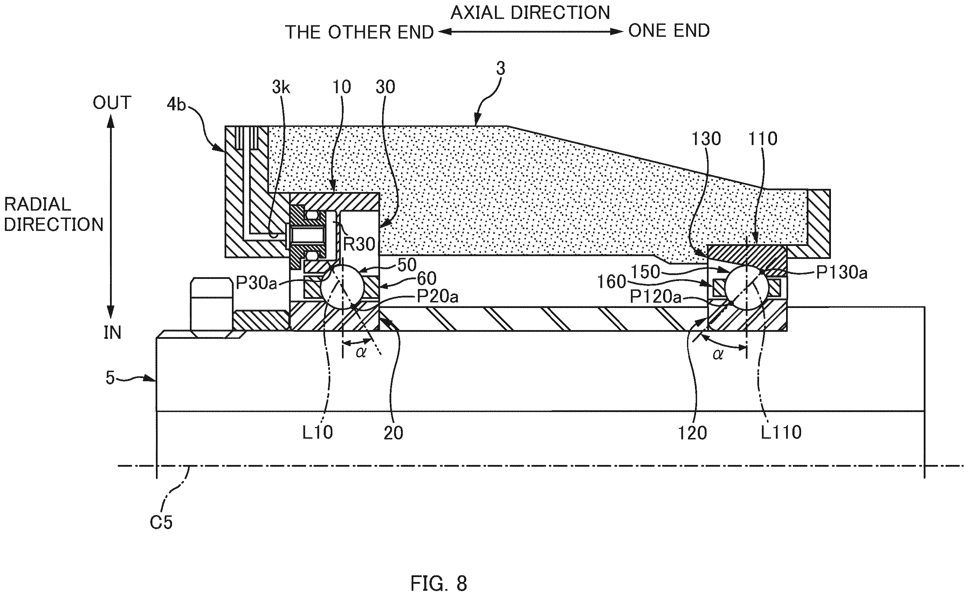

A combination of the first ball bearing 110 and the second ball bearing 10 is however not limited to the foregoing O arrangement. X arrangement shown in FIG. 8 may be employed. In the case of the X arrangement, the following straight lines are mirror images of each other to the radial direction: the straight line L110 associated with the contact angle α of the first ball bearing 110; and the straight line L10 associated with the contact angle α of the second ball bearing 10. The first ball bearing 110 and the second ball bearing 10 cooperate and can thereby sustain radial load and axial load in both directions.

As shown in FIG. 7, the outer ring 130 of the first ball bearing 110 is arranged at a certain position on the one-axial-end side with the outer ring 130 inserted into the through hole 3h of the housing 3. The outer ring 130 is fixed to the housing 3 in such a manner as not to permit the radial and axial movements relative to the housing 3. The inner ring 120 of the first ball bearing 110 is arranged at a certain position on the one-axial-end side with the inner surface of the inner ring 120 fitted to the shaft member 5. The inner ring 120 is fixed to the shaft member 5 in such a manner as not to permit the radial and axial movements relative to the shaft member 5.

On the other hand, the outer ring 30 of the second ball bearing 10 is arranged at a certain position on the other-axial-end side with the outer ring 30 inserted into the through hole 3h of the housing 3. The outer ring 30 is fixed to the housing 3 in such a manner as not to permit the radial and axial movements relative to the housing 3. The inner ring 20 of the second ball bearing 10 is arranged at a certain position on the other-axial-end side with the inner surface of the inner ring 20 fitted to the shaft member 5. The inner ring 20 is fixed to the shaft member 5 in such a manner as not to permit the radial and axial movements relative to the shaft member 5.

In such a configuration, if the pressure chamber R30 of the second ball bearing 10 is supplied with the pressurized fluid to generate pressing force, the pressing force is applied not only to the second ball bearing 10 but also to the first ball bearing 110. This will be described below.

The second ball bearing 10 is installed in O arrangement on the other-axial-end side, and the bearing 10 is oriented so as to sustain axial loads directed toward the one-end side. In other words, the bearing 10 is oriented so that, when the pressurized fluid is supplied to the pressure chamber R30, elastic deformation of the thin-wall section 34 of the outer ring 30 towards the other-end side occurs and the inner annular section 32 is displaced to the other-end side.

When the pressurized fluid is supplied to the pressure chamber R30 of the second ball bearing 10, the elastic deformation of the thin-wall section 34 towards the other-end side causes the inner annular section 32 to push the rolling elements 50 towards the other-end side; the rolling elements 50 push the inner ring 20 towards the other-end side at a contact angle α. Then, the rolling elements 50 of the second ball bearing 10 are thereby pressed against the inner ring 20 and the outer ring 30. That is, the second ball bearing 10 is subject to the pressing force.

On the other hand, since the foregoing inner ring 20 is fixed to the shaft member 5, if the inner ring 20 is pushed towards the other-end side, the shaft member 5 is also pushed towards the other-end side. Thus, the inner ring 120 of the second ball bearing 110 which is fixed to the shaft member 5 is pushed towards the other-end side together. The inner ring 120 pushes the rolling elements 150 towards the other-end side at a contact angle α. Consequently, the rolling elements 150 are pushed at the same contact angle α against the outer ring 130 which is fixed to the housing 3. This causes the rolling elements 150 of the first ball bearing 110 to be pressed against the inner ring 120 and the outer ring 130. Thus, the first ball bearing 110 is also subject to the pressing force.

In this application example, the outer ring 30 of the ball bearing 10 and the outer ring 130 of the ball bearing 110 are fixed to the housing 3, and the inner ring 20 of the ball bearing 10 and the inner ring 120 of the ball bearing 110 are fixed to the shaft member 5. These fixings are performed, for example, in the following way.

From the first opening 3hea of the housing 3 on the one-end surface 3ea, the outer ring 130 of the first ball bearing 110 is first inserted into the through hole 3h. The inside diameter of the through hole 3h is almost equal to the outside diameter of the outer ring 130, over the range Aea from the first opening 3hea to a certain position in the axial direction. The tolerance of the through hole 3h for fitting is set so that the inner surface of the through hole 3h and the outer surface of the outer ring 130 abut each other along the entire circumference thereof in operation of the apparatus (machine tool). Accordingly, the outer ring 130 inserted into the through hole 3h is fixed in such a manner as not to permit the radial movement relative to the housing 3. A step surface 3hs1 is formed at the certain position of the through hole 3h, where the inside diameter of the through hole 3h is reduced. The other-end surface of the outer ring 130 abuts the step surface 3hs1. Then, a holding member 4a for preventing withdrawal abuts the one-end surface of the outer ring 130 from the side of the first opening 3hea. The outer ring 130 is consequently fixed in such a manner as not to permit the axial movement relative to the housing 3. The holding member 4a is immovably fixed to the housing 3 by means such as screwing, bolting, and the like.

On the other hand, the inner surfaces of the inner ring 120 of the first ball bearing 110 is fitted to the shaft member 5, which is the supported object. The outside diameter of the shaft member 5 is almost equal to the inside diameter of the inner ring 120, over the range substantially from the other end of the shaft member 5 to a certain position on the one-axial-end side. The tolerance of the shaft member 5 for fitting is set so that the inner surface of the inner ring 120 and the outer surface of the shaft member 5 abut each other along the entire circumference thereof in operation of the apparatus. Accordingly, the inner ring 120 fitted on the shaft member 5 is fixed in such a manner as not to permit the radial movement relative to the shaft member 5. A step surface 5s1 is formed at the certain position of the shaft member 5, where the outside diameter of the shaft member 5 is expanded. The one-end surface of the inner ring 120 abuts the step surface 5s1. Then, the following spacer 6a abuts the other-end surface of the inner ring 120. The inner ring 120 is consequently fixed in such a manner as not to permit the axial movement relative to the shaft member 5.

Similarly, from the second opening 3heb of the housing 3 on the other-end surface 3eb, the outer ring 30 of the second ball bearing 10 is inserted into the through hole 3h. The inside diameter of the through hole 3h is almost equal to the outside diameter of the outer ring 30, over the range Aeb from the second opening 3heb to a certain position in the axial direction. The tolerance of the through hole 3h for fitting is set so that the inner surface of the through hole 3h and the outer surface of the outer ring 30 abut each other along the entire circumference thereof in operation of the apparatus. Accordingly, the outer ring 30 inserted into the through hole 3h is fixed in such a manner as not to permit the radial movement relative to the housing 3. A step surface 3hs2 is formed at the certain position of the through hole 3h, where the inside diameter of the through hole 3h is reduced. The one-end surface of the outer ring 30 abuts the step surface 3hs2. Then, a holding member 4b for preventing withdrawal abuts against the other-end surface of the outer ring 30 from the side of the second opening 3heb. The outer ring 30 is consequently fixed in such a manner as not to permit the axial movement relative to the housing 3. The holding member 4b is immovably fixed to the housing 3 by means such as screwing, bolting, and the like.

On the other hand, the inner surfaces of the inner ring 20 of the second ball bearing 10 is fitted to the shaft member 5, which is the supported object. The outside diameter of the shaft member 5 is almost equal to the inside diameter of the inner ring 20, over the range at least from the other end of the shaft member 5 to the certain position. The tolerance of the shaft member 5 for fitting is set so that the inner surface of the inner ring 20 and the outer surface of the shaft member 5 abut each other along the entire circumference thereof in operation of the apparatus. Accordingly, the inner ring 20 fitted on the shaft member 5 is fixed in such a manner as not to permit the radial movement relative to the shaft member 5. A cylindrical spacer 6a is arranged on a portion of the shaft member 5 between the inner ring 120 of the first ball bearing 110 and the inner ring 20 of the second ball bearing 10, and the spacer 6a covers the outer surface of the shaft member 5. The total axial length of the spacer 6a is set to be almost equal to the distance Ls between the abovementioned step surface 3hs1 and step surface 3hs2 of the through hole 3h. Thus, the other-end surface of the inner ring 120 of the first ball bearing 110 abuts the one-end surface of the spacer 6a, and the one-end surface of the inner ring 20 of the second ball bearing 10 abuts the other-end surface of the spacer 6a. Further, a suitable holding member 6b for preventing withdrawal abuts the other-end surface of the inner ring 20, the holding member 6b including a nut 6n, a collar member 6c and the like. The inner ring 20 is consequently fixed in such a manner as not to permit the axial movement relative to the shaft member 5. The holding member 6b is immovably fixed to the shaft member 5 by means such as screwing and the like.

In the example of FIG. 7, the passageway 3k through which the pressurized fluid is supplied to the fluid-supply hole 40h of the plug member 40 is drilled in the housing 3 in manifold fashion. The reason for this is that the second ball bearing 10 is arranged so that the plug member 40 of the pressure chamber R30 of the outer ring 30 opposes the step surface 3hs2 of the through hole 3h of the housing 3. Accordingly, if the second ball bearing 10 is in a reverse orientation, the passageway 3k is provided in the holding member 4b as in the example of the X arrangement of FIG. 8.

### === Second Embodiment ===

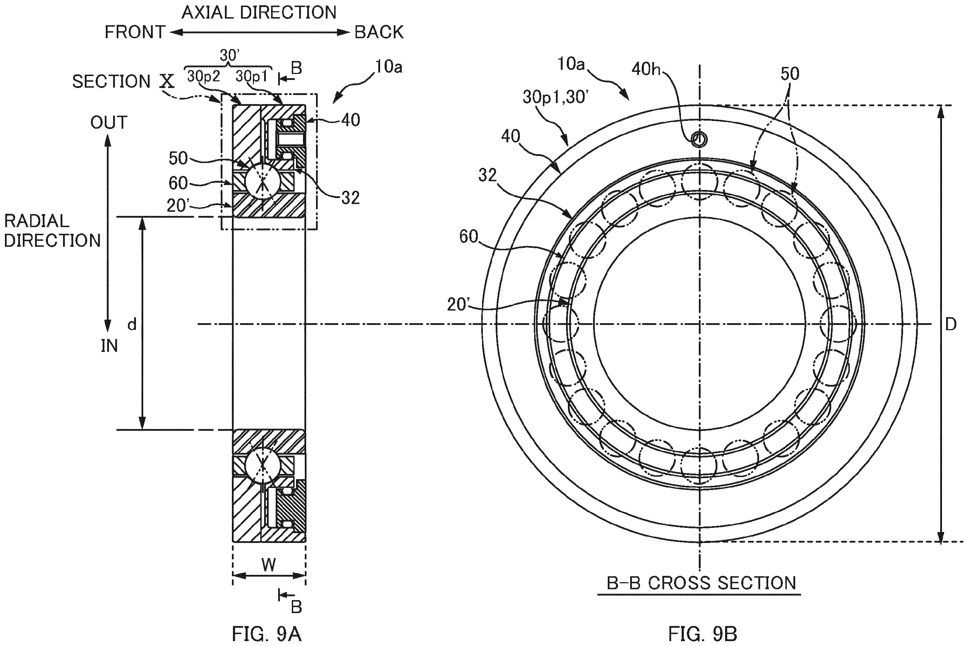

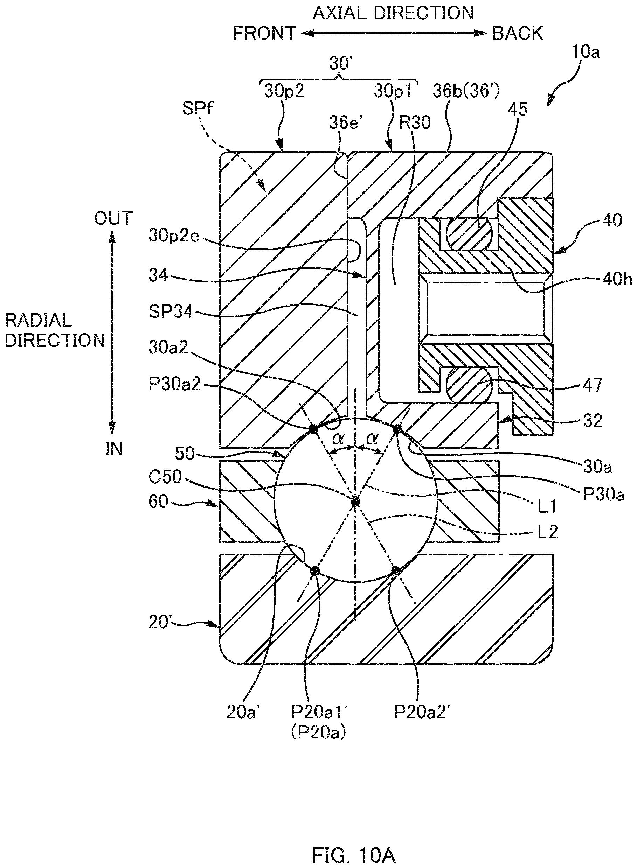

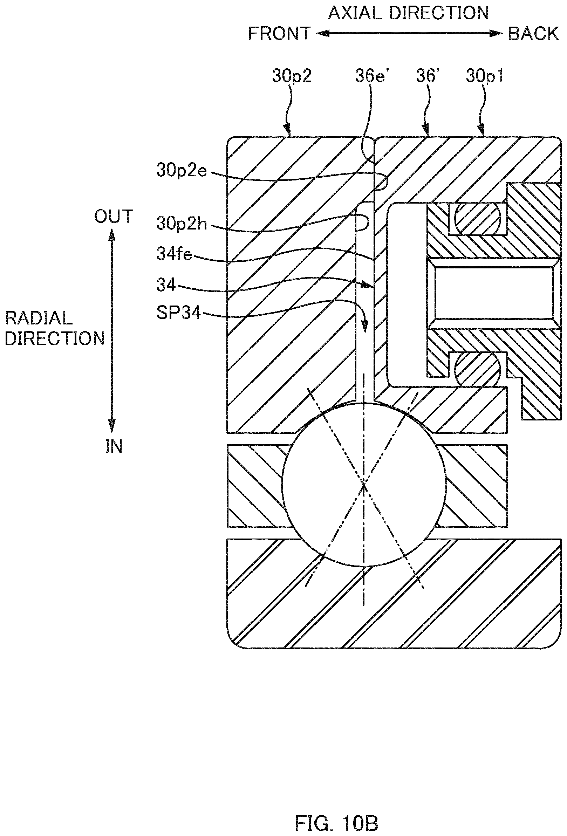

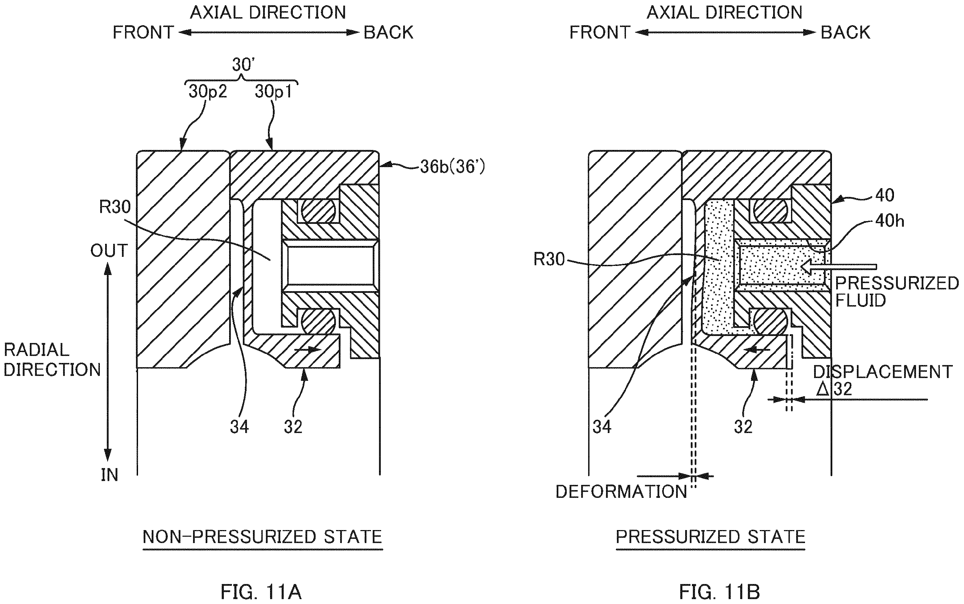

FIG. 9A is a schematic central sectional view of a ball bearing 10a of the second embodiment, and FIG. 9B is a cross-sectional view taken along line B-B in FIG. 9A. FIG. 10A is a magnified view of section X in FIG. 9A, and FIG. 10B shows a modified example of the ball bearing 10a of the second embodiment. FIGS. 11A and 11B are magnified views of the outer ring 30' in FIG. 10A.

The ball bearing 10 of the first embodiment is in the category of single-row angular contact ball bearings. The ball bearing 10a of the second embodiment is on the other hand in the category of so-called four-point bearings. The second embodiment is different from the first embodiment mainly in this point. In other words, in the first embodiment, as shown in FIG. 4, each rolling element 50 contacts the rolling motion surface 30a of the outer ring 30 at one place and contacts the rolling motion surface 20a of the inner ring 20 at one place (two places in total). In the second embodiment, as shown in FIG. 10A, each rolling element 50 contacts the rolling motion surface 30a' of the outer ring 30' at two places and contacts the rolling motion surface 20a' of the inner ring 20' at two places (four places in total). These embodiments are different mainly in the foregoing point. This configuration allows the single ball bearing 10a to sustain radial load and axial load in both directions. That is, the ball bearing 10a of the second embodiment alone can serve as a structure for supporting the shaft member 5, not in combination with another ball bearing.

The second embodiment will be described below. Some parts of the second embodiment have the same configuration as or a similar configuration to the first embodiment. The parts having the foregoing similar configuration are obtained by modifying partly the configuration of the first embodiment. Thus, in the following description, the same components as those of the first embodiment will be denoted by the same reference numerals, and the descriptions thereof will be omitted. The parts formed by modifying parts of the configuration of the first embodiment will be described with reference to the configuration of the first embodiment as necessary.

As shown in FIG. 10A, on the rolling motion surface 20a' of the inner ring 20', the contact position P20a1' of a rolling element 50 is located forward of the position of the ball center C50 of the rolling element 50 in the axial direction. Also, on the rolling motion surface 20a', another contact position P20a2' of the rolling element 50 is located backward of the position of the ball center C50. Thus, the inner ring 20' contacts each rolling element 50 at two places in total. Of these two contact positions P20a1' and P20a2', the forward contact position P20a1' is the same as in the first embodiment, that is, the contact position P20a at which the rolling element 50 is pressed at a contact angle α of 35° works together with the contact position P30a on the rolling motion surface 30a of the inner annular section 32 of the outer ring 30'. The rolling element 50 contacts these contact positions P20a1' and P30a, and thereby a backward axial load acting on the shaft member 5 can be sustained.

On the other hand, the outer ring 30' includes: a first outer-ring section 30p1 which is formed by modifying a part of the outer ring 30 of the first embodiment; and a second outer-ring section 30p2 which is fixed to the first outer-ring section 30p1 (corresponding to the second annular section).

The first outer-ring section 30p1 is the outer annular section 36 of the outer ring 30 of the first embodiment from which a substantially-front portion 36f of the outer annular section 36 is removed, that is, the portion 36f which is located forward of the thin-wall section 34 is removed. In other words, the first outer-ring section 30p1 has only a substantially-back portion 36b of the outer annular section 36 of the first embodiment, which is an outer annular section 36' after the foregoing removal. The configuration of the first outer-ring section 30p1 mentioned above includes the thin-wall section 34 and the inner annular section 32 on the outer annular section 36' in an integrated manner. Then, in the large space SPf of the substantially-front portion, which is made by the removal, a second outer-ring section 30p2 is newly arranged, and is fixed to the outer annular section 36' of the first outer-ring section 30p1 in such a manner as not to permit the relative movement.

The second outer-ring section 30p2 is an annular member whose outside diameter is equal to that of the first outer-ring section 30p1. The rolling motion surface 30a2 (corresponding to the second rolling motion surface) is formed directly on the inner surface of the second outer-ring section 30p2 along the entire circumference of the inner surface. The rolling motion surface 30a2 is a concave surface whose cross-sectional shape is substantially arc-shaped. On the rolling motion surface 30a2, the contact position P30a2 of the rolling element 50 is set so as to correspond to the back contact position P20a2' on the inner ring 20'. Thus, between the contact position P30a2 and the back contact position P20a2' on the inner ring 20', the rolling element 50 can be held from both sides of the radial direction and from both sides of the axial direction. Thus, the rolling element 50 contacts these contact positions P20a2' and P30a2; thereby it is possible to sustain forward axial load which acts on the shaft member 5. As mentioned above, backward axial load can be sustained at the contact position P30a of the inner annular section 32 of the outer ring 30' and at the front contact position P20a1' of the inner ring 20'. So, the ball bearing 10a enables axial load in both directions to be sustained.

In the second embodiment, as shown in FIG. 10A, two contact angles α and α, which are associated with contacts at four positions, are equal to each other, 35°. In other words, the following contact angles α and α are equal: the contact angle α associated with straight line L1 connecting the contact position P30a on the rolling motion surface 30a of the outer ring 30' with the contact position P20a1' on the rolling motion surface 20a' of the inner ring 20'; and the contact angle α associated with straight line L2 connecting the contact position P30a2 on the rolling motion surface 30a2 of the outer ring 30' with the contact position P20a2' on the rolling motion surface 20a' of the inner ring 20'. However, the invention is not limited thereto. The two contact angles α and α may be different from each other; for example, one may be 35° and the other may be 40°.

In the example of FIG. 10A, the front-end face 36e' of the outer annular section 36' of the first outer-ring section 30p1 projects slightly forward of the thin-wall section 34, and a space SP34 is formed between the thin-wall section 34 and the back-end face 30p2e of the second outer-ring section 30p2. This space SP34 completely prevents the thin-wall section 34 from being subject to constraining force by the second outer-ring section 30p2, and forward elastic deformation of the thin-wall section 34 therefore can occur according to the fluid-supply pressure of the pressurized fluid. However, the invention is not limited thereto. That is, if, between the thin-wall section 34 and the back-end face 30p2e of the second outer-ring section 30p2, there is the space SP34 to allow for forward elastic deformation of the thin-wall section 34, any configuration other than the foregoing configuration may also be employed. For example, as shown in FIG. 10B, if the front-end face 36e' of the outer annular section 36' of the first outer-ring section 30p1 is formed at the same position in the axial direction with respect to the front-end face 34e of the thin-wall section 34, the space SP34 to allow for forward elastic deformation of the thin-wall section 34 may be prepared by forming a recessed section 30p2h on the back-end face 30p2e of the second outer-ring section 30p2, over the range in which the recessed section faces the thin-wall section 34.

In the same way as the first embodiment, the pressing mechanism of the ball bearing 10a of the second embodiment is built into the outer ring 30'. That is, the outer annular section 36', which is the contour of the outer ring 30', accommodates the thin-wall section 34, the inner annular section 32 and the plug member 40, which constitute pressing mechanism. Thus, the outer shape of the ball bearing 10a is able to meet various specifications such as standards or industrial standards of general ball bearings. For example, as shown in FIG. 10A, the ball bearing 10a of the second embodiment has a substantially rectangular cross section similar to that of general ball bearings. More specifically, the inside diameter of the inner ring 20' which determines the inner surface of the ball bearing 10a is uniform through the entire length in the axial direction. The outside diameter of the outer ring 30' which determines the outer surface of the ball bearing 10a is uniform through the entire length in the axial direction. Both edges of the outer ring 30' are in the same position in the axial direction as both edges of the inner ring 20'. In addition, the cage 60 and the plug member 40 do not project beyond both edges of the outer ring 30' in the axial direction, and is axially inside thereof. Thus, as shown in FIGS. 9A and 9B, abutment dimensions of the ball bearing 10a are determined by the bearing outside diameter D, the bearing inside diameter d, and a width W (axial length W), which are usually used in ball bearings. The four-point bearing 10a, like the second embodiment, including the pressing mechanism can therefore be used in various apparatuses like machine tools as easily as a standard four-point bearing is used.

FIGS. 11A and 11B are explanatory diagrams illustrating the process of applying the pressing force. That is, these figures show that it is possible to apply the pressing force by elastic deformation of the thin-wall section 34 of the outer ring 30', the elastic deformation being caused by supplying the pressurized fluid and pressure to the pressure chamber R30 of the four-point bearing 10a. However, the description is substantially the same as that of the first embodiment shown in FIGS. 5A and 5B, the description thereof is omitted.

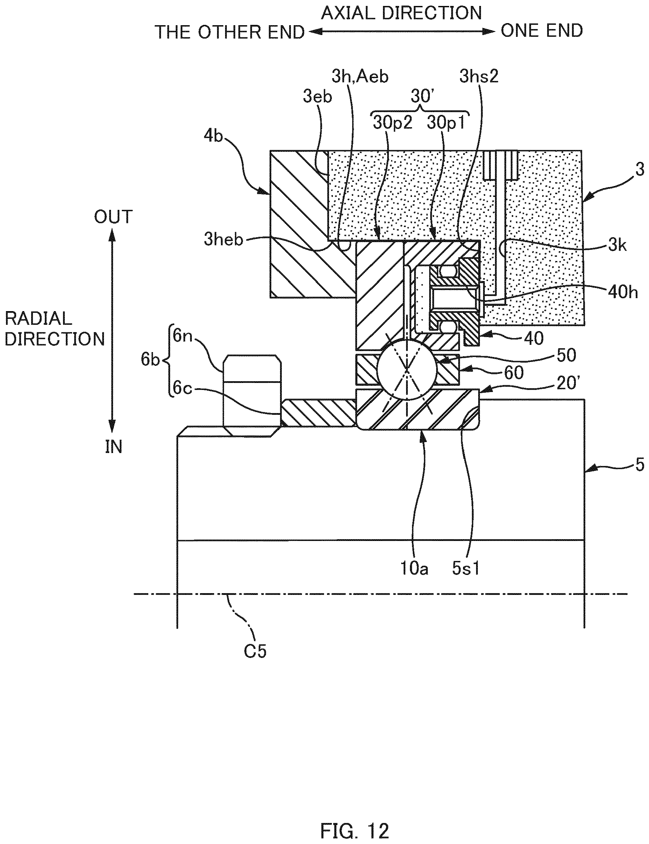

FIG. 12 is a schematic central sectional view of an application example of the ball bearing 10a of the second embodiment. In this example, the ball bearing 10a of the second embodiment is applied to a supporting structure in which a suitable shaft member 5 is supported in the housing 3. In FIG. 12, one side of the shaft axis C5 in the radial direction (the upper side in FIG. 12) alone is illustrated and the other side is omitted, because the configuration of the application example is in a mirror image relationship to the shaft axis C5 of the shaft member 5. The shaft axis C5 of the shaft member 5 extends along the axial direction of the ball bearing 10a. Of both ends in the axial direction, the right end in the figure is hereinafter referred to as the "one end (one axial end)", and the left end is hereinafter referred to as the "other end (other axial end)".

The ball bearing 10a of the second embodiment alone can sustain radial load and axial load in both axial directions as mentioned above. In this application example, the single ball bearing 10a of the second embodiment is used as a supporting structure in which the shaft member 5 is supported by the housing 3.

The housing 3 includes a through hole 3h extending along the axial direction and serving as an accommodating hole 3h which accommodates the shaft member 5, the shaft member 5 being the supported object. With the shaft member 5 being accommodated within the through hole 3h, the shaft member 5 is rotatablely supported about the shaft axis C5 thereof by the ball bearing 10a.

From the opening 3heb of the housing 3 on the other-end surface 3eb, the outer ring 30' is inserted into the through hole 3h. The inside diameter of the through hole 3h is almost equal to the outside diameter of the outer ring 30', over the range Aeb from the opening 3heb to a certain position in the axial direction. The tolerance of the through hole 3h for fitting is set so that the inner surface of the through hole 3h and the outer surface of the outer ring 30' abut each other along the entire circumference thereof in operation of the apparatus. Accordingly, the outer ring 30' inserted into the through hole 3h is fixed in such a manner as not to permit the radial movement relative to the housing 3. A step surface 3hs2 is formed at the certain position of the through hole 3h, where the inside diameter of the through hole 3h is reduced. The one-end surface of the outer ring 30' abuts the step surface 3hs2. And, a holding member 4b for preventing withdrawal abuts the other-end surface of the outer ring 30' from the side of the opening 3heb. The outer ring 30' is consequently fixed in such a manner as not to permit the axial movement relative to the housing 3. The holding member 4b is immovably fixed to the housing 3 by means such as screwing, bolting, and the like.

On the other hand, the inner surface of the inner ring 20' is fitted to the shaft member 5, which is the supported object. The outside diameter of the shaft member 5 is almost equal to the inside diameter of the inner ring 20', over the range substantially from the other end of the shaft member 5 to a certain position on the one-axial-end side. The tolerance of the shaft member 5 for fitting is set so that the inner surface of the inner ring 20' and the outer surface of the shaft member 5 abut each other along the entire circumference thereof in operation of the apparatus. Accordingly, the inner ring 20' fitted on the shaft member 5 is fixed in such a manner as not to permit the radial movement relative to the shaft member 5. The step surface 5s1 is formed at the certain position of the shaft member 5, where the outside diameter of the shaft member 5 is expanded. The one-end surface of the inner ring 20' abuts the step surface 5s1. And, a suitable holding member 6b for preventing withdrawal abuts the other-end surface of the inner ring 20', the holding member 6b including a nut 6n, a collar member 6c and the like. The inner ring 20' is consequently fixed in such a manner as not to permit the axial movement relative to the shaft member 5. The holding member 6b is immovably fixed to the shaft member 5 by means such as screwing, and the like.

In the example of FIG. 12, the passageway 3k through which the pressurized fluid is supplied to the fluid-supply hole 40h of the plug member 40 is drilled in the housing 3 in manifold fashion. The reason for this is the same as in the first embodiment. That is, the ball bearing 10a is arranged so that the plug member 40 of the pressure chamber R30 of the outer ring 30' opposes the step surface 3hs2 of the through hole 3h of the housing 3. Accordingly, if the ball bearing 10a is in a reverse orientation of the axial direction, the passageway 3k is provided in the holding member 4b.

### === Other Embodiments ===

While the embodiments according to the invention are described above, the invention is not limited to the embodiments. The invention can be altered as described below without departing from the gist thereof.

In the foregoing embodiment, the ball bearings 10 and 10a have rectangular cross sections. That is, the outer surfaces and the inner surfaces of the ball bearings 10 and 10a are parallel to the axial direction, and the surfaces of the ball bearings 10 and 10a on both axial ends are parallel to the radial direction. However, this invention is not limited thereto. The ball bearings 10 and 10a may not have rectangular cross sections.

In the foregoing embodiment, the ball bearings 10 and 10a have the contact angles of 35°. However, this invention is not limited thereto. That is, the contact angles may be set to any angle other than 0° and a multiple of 90°.

In the foregoing embodiment, it is described that the contact angle α between each rolling element 50 and the inner ring 20 is the same as the contact angle α between each rolling element 50 and the outer ring 30. However, the invention is not limited thereto. For example, even though the contact angle α between each rolling element 50 and the inner ring 20 is designed to be the same as the contact angle α between each rolling element 50 and the outer ring 30, these contact angles α and α will differ depending on such a condition as the number of revolutions or load during its use. In some cases, the contact angle α between each rolling element 50 and the inner ring 20 is designed to be different from the contact angle α between each rolling element 50 and the outer ring 30. When the contact angles α of the inner ring 20 and the outer ring 30 are different as mentioned above, the former one is referred to as an inner-ring contact angle α, and the latter one is referred to as an outer-ring contact angle α, for the purpose of distinguishing them. The contact angles α are respectively defined as follows. The inner-ring contact angle α is an angle between the radial direction and the straight line connecting the ball center C50 of each rolling element 50 with the contact position P20a of the rolling element 50 on the rolling motion surface 20a of the inner ring 20. Similarly, outer-ring contact angle α is an angle between the radial direction and the straight line connecting the ball center C50 of each rolling element 50 with the contact position P30a of the rolling element 50 on the rolling motion surface 30a of the outer ring 30.

### Reference Signs List

3 housing, 3ea one-end surface, 3eb other-end surface, 3h through hole, 3ha inner surface, 3hea first opening, 3heb second opening,
3hs1 step surface, 3hs2 step surface, 3k passageway,
4a holding member, 4b holding member,
5 shaft member, 5s1 step surface,
6a spacer, 6b holding member, 6c collar member, 6n nut,
10 angular contact ball bearing,
10a four-point bearing,
20 inner ring, 20a rolling motion surface,
30 outer ring, 30a rolling motion surface,
30a2 rolling motion surface (second rolling motion surface),
30p1 first outer-ring section,
30p2 second outer-ring section (second annular section), 30p2e back-end face, 30p2h recessed section,
32 inner annular section, 32eb back-end face,
34 thin-wall section, 34e1 outer edge section, 34e2 inner edge section, 34fe front-end face,
36 outer annular section, 36b substantially-back portion, 36e front-end face, 36f substantially-front portion,
40 plug member, 40eb back-end face, 40ef front-end face, 40f flange section,
40h fluid-supply hole, 40t1 groove, 40t2 groove,
45 packing, 47 packing (seal member),
50 rolling element, 60 cage,
110 angular contact ball bearing,
120 inner ring, 120a rolling motion surface,
130 outer ring, 130a rolling motion surface, 130b outer surface,
150 rolling element,
160 cage,
R30 pressure chamber, SP annular space, SPf space,
G gap, G2 gap, SP34 space,
P20a contact position, P20a1 contact position, P20a2 contact position,
P30a contact position, P30a2 contact position,
P120a contact position, P130a contact position,

## Claims

1. A ball bearing (10, 10a), comprising:
an inner ring (20, 20');
an outer ring (30, 30');
a plurality of spherical rolling elements (50) that roll while in contact with the outer ring (30, 30') and the inner ring (20, 20') at contact angles (α), each contact angle (α) corresponding to the outer ring (30) and the inner ring (20),
the outer ring (30, 30') including:
an inner annular section (32) having a rolling motion surface (30a) with which the rolling elements (50) roll while in contact at said contact angle (α);
a thin-wall section (34) extending radially outwardly from the inner annular section (32) in an integrated manner; and
an outer annular section (36, 30p1) that is provided on an outer edge section (34e1) of the thin-wall section (34) in an integrated manner so as to support the inner annular section (32) in an axially-movable manner through the thin-wall section (34);
a fluid-supply hole (40h) that supplies pressurized fluid to an annular space (R30, SP) partitioned by the inner annular section (32), the thin-wall section (34) and the outer annular section (36, 30p1);
a ring-shaped plug member (40)which closes the annular space (R30, SP) by being inserted into the annular space (R30, SP) while facing the thin-wall section (34), said plug member (40) being fixed to the outer annular section (36, 30p1) in such a manner as not to permit relative movement; and
a seal member (47) made of rubber or resin, said seal member (47) being placed in a gap (G)between said plug member (40) and said inner annular section (32)so that an inner surface of said seal member (47) contacts an outer surface of said inner annular section (32);
the rolling elements (50) being pressed against the outer ring (30, 30')and the inner ring (20, 20') by displacement of the inner annular section (32) in the axial direction, said displacement being caused by elastic deformation of the thin-wall section (34) in the axial direction by the pressurized fluid supplied from the fluid-supply hole (40h),
**characterized in that**
the outer ring (30; 30') comprises a single piece consisting of said inner annular section (32), said outer annular section (36, 30p1) and said thin-wall section (34), and
said gap (G) is arranged so that the plug member (40)is not in contact with the inner annular section (32).

2. A ball bearing (10a) according to claim 1, wherein
the inner ring (20') contacts each of the rolling elements (50) at two places (P20a1', P20a2')in the axial direction,
the outer ring (30') comprises a first outer-ring section (30p1) and a second outer-ring section (30p2)which is an annular member and fixed to the first outer-ring section (30p1), each of said first and second outer ring sections (30p1, 30p2) having a respective one of two rolling motion surfaces (30a, 30a2) of which the rolling motion surface (30a)of the first outer-ring section (30p1) contacts the rolling element (50) at one place (P30a)in the axial direction, the one place (P30a) corresponding to one (P20a1') of the two places (P20a1', P20a2') in the axial direction associated with the inner ring (20'), and
the rolling motion surface (30a2) of the second outer-ring section (30p2) contacts the rolling element (50) at one place (P30a2)in the axial direction, which one place (P30a2) corresponds to another one (P20a2') of the two places (P20a1, P20a2') in the axial direction associated with the inner ring (20').

## Patentansprüche

1. Ein Kugellager (10, 10a), umfassend:
einen Innenring (20, 20');
einen Außenring (30, 30');
mehrere kugelförmige Rollkörper (50), die bei Kontakt mit dem Außenring (30, 30') und dem Innenring (20, 20') in Kontaktwinkeln (α) rollen, wobei jeder Kontaktwinkel (α) dem Außenring (30) und dem Innenring (20) entspricht, wobei der Außenring (30, 30') beinhaltet:
einen inneren ringförmigen Abschnitt (32) mit einer Rollbewegungsfläche (30a), mit der die Rollkörper (50) bei Kontakt mit dem Kontaktwinkel (α) rollen;
einen dünnwandigen Abschnitt (34), der sich von dem inneren ringförmigen Abschnitt (32) in einer integrierten Weise radial nach außen erstreckt; und
einen äußeren ringförmigen Abschnitt (36, 30p1), der an einem äußeren Randabschnitt (34e1) des dünnwandigen Abschnitts (34) in integrierter Weise vorgesehen ist, um den inneren ringförmigen Abschnitt (32) in axial beweglicher Weise durch den dünnwandigen Abschnitt (34) zu stützen;
eine Fluidzufuhröffnung (40h), die einem ringförmigen Raum (R30, SP), der durch den inneren ringförmigen Abschnitt (32), den dünnwandigen Abschnitt (34) und den äußeren ringförmigen Abschnitt (36, 30p1) unterteilt ist, unter Druck stehendes Fluid zuführt;
ein ringförmiges Stopfenelement (40), das den ringförmigen Raum (R30, SP) verschließt, indem es in den ringförmigen Raum (R30, SP) eingeführt wird, während es dem dünnwandigen Abschnitt (34) zugewandt ist, wobei das Stopfenelement (40) an dem äußeren ringförmigen Abschnitt (36, 30p1) in einer solchen Weise befestigt ist, dass es keine Relativbewegung zulässt; und
ein Dichtungselement (47), das aus Gummi oder Harz hergestellt ist, wobei das Dichtungselement (47) in einem Spalt (G) zwischen dem Stopfenelement (40) und dem inneren ringförmigen Abschnitt (32) angeordnet ist, so dass eine Innenfläche des Dichtungselements (47) eine Außenfläche des inneren ringförmigen Abschnitts (32) berührt;
wobei die Rollkörper (50) durch Verschiebung des inneren ringförmigen Abschnitts (32) in axialer Richtung gegen den Außenring (30, 30') und den Innenring (20, 20') gepresst werden, wobei die Verschiebung durch elastische Verformung des dünnwandigen Abschnitts (34) in axialer Richtung durch das unter Druck stehende Fluid verursacht wird, das von der Fluidzufuhröffnung (40h) zugeführt wird,
**dadurch gekennzeichnet, dass**
der Außenring (30; 30') ein einziges Stück umfasst, das aus dem inneren ringförmigen Abschnitt (32), dem äußeren ringförmigen Abschnitt (36, 30p1) und dem dünnwandigen Abschnitt (34) besteht, und
dass der Spalt (G) so angeordnet ist, dass das Stopfenelement (40) den inneren ringförmigen Abschnitt (32) nicht berührt.

2. Ein Kugellager (10a) nach Anspruch 1, wobei
der Innenring (20') jeden der Rollkörper (50) an zwei Stellen (P20a1', P20a2') in axialer Richtung kontaktiert,
der Außenring (30') einen ersten Außenringabschnitt (30p1) und einen zweiten Außenringabschnitt (30p2) umfasst, der ein ringförmiges Element ist und an dem ersten Außenringabschnitt (30p1) befestigt ist, wobei jeder der ersten und zweiten Außenringabschnitte (30p1, 30p2) eine jeweilige von zwei Rollbewegungsflächen (30a, 30a2) aufweist, von denen die Rollbewegungsfläche (30a) des ersten Außenringabschnitts (30p1) den Rollkörper (50) an einer Stelle (P30a) in axialer Richtung berührt, wobei die eine Stelle (P30a) einer (P20a1') der beiden dem Innenring (20') zugeordneten Stellen (P20a1', P20a2') in axialer Richtung entspricht, und
die Rollbewegungsfläche (30a2) des zweiten Außenringabschnitts (30p2) den Rollkörper (50) an einer Stelle (P30a2) in axialer Richtung berührt, welche einer Stelle (P30a2) einer anderen (P20a2') der beiden dem Innenring (20') zugeordneten Stellen (P20a1, P20a2') in axialer Richtung entspricht.

## Revendications

1. Roulement à billes (10, 10a), comprenant :
un anneau intérieur (20, 20') ;
un anneau extérieur (30, 30') ;
une pluralité d'éléments de roulement sphériques (50) qui roulent lorsqu'ils sont en contact avec l'anneau extérieur (30, 30') et l'anneau intérieur (20, 20') à des angles de contact (α), chaque angle de contact (α) correspondant à l'anneau extérieur (30) et à l'anneau intérieur (20), l'anneau extérieur (30, 30') comprenant :
une section annulaire intérieure (32) comportant une surface de mouvement de roulement (30a) avec laquelle les éléments de roulement (50) roulent lorsqu'ils sont en contact audit angle de contact (α) ;
une section à paroi mince (34) s'étendant radialement vers l'extérieur à partir de la section annulaire intérieure (32) d'une manière intégrée ; et
une section annulaire extérieure (36, 30p1) qui est prévue sur une section de bord extérieure (34e1) de la section à paroi mince (34) de manière intégrée de manière à supporter la section annulaire intérieure (32) de manière mobile axialement à travers la section à paroi mince (34) ;
un trou d'alimentation en fluide (40h) qui fournit du fluide sous pression à un espace annulaire (R30, SP) divisé par la section annulaire intérieure (32), la section à paroi mince (34) et la section annulaire extérieure (36, 30p1) ;
un élément de bouchon en forme d'anneau (40) qui ferme l'espace annulaire (R30, SP) par son insertion dans l'espace annulaire (R30, SP) tout en faisant face à la section à paroi mince (34), ledit élément de bouchon (40) étant fixe par rapport à la section annulaire extérieure (36, 30p1) de manière à ne pas permettre un mouvement relatif ; et
un élément d'étanchéité (47) en caoutchouc ou en résine, ledit élément d'étanchéité (47) étant placé dans un espace (G) entre ledit élément de bouchon (40) et ladite section annulaire intérieure (32) de sorte qu'une surface intérieure dudit élément d'étanchéité (47) entre en contact avec une surface extérieure de ladite section annulaire intérieure (32) ;
les éléments de roulement (50) étant pressés contre l'anneau extérieur (30, 30') et l'anneau intérieur (20, 20') par déplacement de la section annulaire intérieure (32) dans la direction axiale, ledit déplacement étant provoqué par une déformation élastique de la section à paroi mince (34) dans la direction axiale par le fluide sous pression fourni par le trou d'alimentation en fluide (40h), **caractérisé en ce que** l'anneau extérieur (30 ; 30') comprend une seule pièce constituée par ladite section annulaire intérieure (32), ladite section annulaire extérieure (36, 30p1) et ladite section à paroi mince (34) et ledit espace (G) sont disposés de manière que l'élément de bouchon (40) ne soit pas en contact avec la section annulaire intérieure (32).

2. Roulement à billes (10a) selon la revendication 1, dans lequel l'anneau intérieur (20') entre en contact avec chacun des éléments de roulement (50) à deux emplacements (P20a1', P20a2') dans la direction axiale, l'anneau extérieur (30') comprend une première section annulaire extérieure (30p1) et une seconde section annulaire extérieure (30p2) qui est un élément annulaire et fixée à la première section annulaire extérieure (30p1), chacune desdites première et seconde sections annulaires extérieures (30p1, 30p2) comportant une surface respective de deux surfaces de mouvement de roulement (30a, 30a2) dont la surface de mouvement de roulement (30a) de la première section annulaire extérieure (30p1) entre en contact avec l'élément de roulement (50) à un emplacement (P30a) dans la direction axiale, le seul emplacement (P30a) correspondant à l'un (P20a1') des deux emplacements (P20a1', P20a2') dans la direction axiale associé à l'anneau intérieur (20'), et la surface de mouvement de roulement (30a2) de la seconde section annulaire extérieure (30p2) entre en contact avec l'élément de roulement (50) à un emplacement (P30a2) dans la direction axiale, lequel emplacement (P30a2) correspond à un autre (P20a2') des deux emplacements (P20a1, P20a2') dans la direction axiale associé à l'anneau intérieur (20').
